# EUROPEAN PATENT APPLICATION

(11) **EP 4 592 641 A1**
(43) Date of publication of application: **30.07.2025**
(21) Application number: 23867840.3
(22) Date of filing: 21.06.2023
(51) Int. Cl.: G01C 15/00, E21D 9/00, G01C 7/06

(54) **CONSTRUCTION MANAGEMENT SYSTEM FOR TUNNEL AND CONSTRUCTION MANAGEMENT METHOD FOR TUNNEL**

(30) Priority: 21.09.2022 JP 2022149814
(71) Applicant: IXS Co., Ltd., Kawasaki-shi, Kanagawa, 212-0032 (JP)
(72) Inventor: YAMASAKI, Fuminori, Kawasaki-shi, Kanagawa 212-0032 (JP); KARINO, Takashi, Kawasaki-shi, Kanagawa 212-0032 (JP); MAEDA, Kosuke, Kawasaki-shi, Kanagawa 212-0032 (JP)
(74) Representative: TBK
(86) International application number: PCT/JP2023/022857
(87) International publication number: WO 2024/062712

(57) **Abstract**

Provided is a construction management system capable of creating a three-dimensional model that represents an inner circumferential face of a tunnel and the individual positions of the tunnel with high accuracy, and a construction management method applicable to the system. The method includes a first step (step S11) of placing a control point in a vicinity of an entrance of the tunnel, and arranging target markers on the inner circumferential face of the tunnel; a second step (step S12) of conducting measurement with the measuring means from different positions; and a third step (step S13) of creating a cylindrical model that represents the inner circumferential face, by combining three-dimensional point cloud sets individually obtained by the measurement from the different positions, the third step being structured to combine the first three-dimensional point cloud set and the second three-dimensional point cloud set, after alignment with reference to the point cloud that represents the target markers contained in both of the first three-dimensional point cloud set and the second three-dimensional point cloud set.

## Description

### TECHNICAL FIELD

This invention relates to a tunnel construction management system and a tunnel construction management method.

### BACKGROUND ART

Mountain tunnel is usually constructed by a construction method such as laterally excavating mountain area, discharging earth and sand, casting concrete over an inner circumferential face of the tunnel, sticking rock bolts into the natural ground to integrate the natural ground up to deep inside, so that the natural ground will not collapse.

When applying such construction method, it is important to measure and manage displacement of the inner circumferential face of the tunnel, over a period from the excavation to the concrete casting. For example, the natural ground after excavated is judged to be stabilized, after measuring the displacement of the inner circumferential face, and confirming that the amount of displacement was sufficiently reduced.

Patent Literature 1 is exemplified as a prior art for thus measuring the displacement of the inner circumferential face of the tunnel.

Patent Literature 1 discloses measurement of a tunnel inner wall, with use of a laser scanner mounted on a locomotive vehicle that travels inside the tunnel, and a total station arranged on the rear of the locomotive vehicle. The invention according to the literature uniquely converts survey data from the laser scanner, which is expressed on a local coordinate system in the tunnel (point cloud data), to point cloud data expressed on an absolute coordinate system, according to survey with the total station (position of the laser scanner, and two marker positions arranged on the locomotive vehicle).

### CITATION LIST

### PATENT LITERATURE

[Patent Literature 1] JP 2018-163063 A

### SUMMARY OF THE INVENTION

### TECHNICAL PROBLEM

The invention disclosed in Patent Literature 1, combining the survey with the laser scanner and the survey with the total station, needs to convert position information of the point cloud data acquired by the laser scanner into an absolute coordinate system.

In this structure, accuracy of the position information of the point cloud data acquired by the laser scanner will change depending on distance from the laser scanner. Therefore, the position information cannot always be acquired accurately enough for all of the point cloud data acquired by the laser scanner, even if the survey with the total station regarding the position of the laser scanner could be conducted with sufficient accuracy. Hence, the point cloud data acquired by the laser scanner from a certain point does not always match the point cloud data acquired after moved to another point, making it unable to create a three-dimensional model that represents the whole tunnel, as the tunnel excavation proceeds deeper.

This invention is aimed at solving the aforementioned problem, and is to provide a construction management system capable of creating a three-dimensional model that represents an inner circumferential face of a tunnel and the individual positions of the tunnel with high accuracy, and a construction management method applicable to the system.

### SOLUTION TO PROBLEM

According to this invention, there is provided a tunnel construction management system that includes:
a control point placed in a vicinity of an entrance of a tunnel;
target markers arranged on an inner circumferential face of the tunnel, at minimum three positions differently apart in the longitudinal direction of the tunnel from the control point;
a measuring means structured to travel in the longitudinal direction from the entrance side where the control point is placed, and to measure the inner circumferential face from different positions;
a data processing means structured to create a cylindrical model that represents the inner circumferential face, by combining a first three-dimensional point cloud set obtained from measurement taken at a first position, and a second three-dimensional point cloud set obtained from measurement taken at a second position different from the first position,
the first three-dimensional point cloud set containing a point cloud that represents a first target marker arranged in front of the first position with reference to the control point, and a point cloud that represents a second target marker arranged behind the first position and in front of the second position with reference to the control point,
the second three-dimensional point cloud set containing a point cloud that represents the second target marker, and a point cloud that represents a third target marker arranged behind the second position with reference to the control point, and
the data processing means being structured to combine the first three-dimensional point cloud set and the second three-dimensional point cloud set, after alignment with reference to the point cloud that represents the second target marker.

According to this invention, there is also provided a tunnel construction management method that includes:
a first step of placing a control point in a vicinity of an entrance of a tunnel, and arranging target markers on an inner circumferential face of the tunnel, at minimum three points differently apart in the longitudinal direction of the tunnel from the control point;
a second step of causing the measuring means for measuring the inner circumferential face to travel in the longitudinal direction from the entrance side where the control point is placed, and of causing the measuring means to take measurements from the different positions; and
a third step of creating a cylindrical model that represents the inner circumferential face, by combining a first three-dimensional point cloud set obtained from measurement taken at a first position, and a second three-dimensional point cloud set obtained from measurement taken at a second position different from the first position,
the first three-dimensional point cloud set containing a point cloud that represents a first target marker arranged in front of the first position with reference to the control point, and a point cloud that represents a second target marker arranged behind the first position and in front of the second position with reference to the control point,
the second three-dimensional point cloud set containing a point cloud that represents the second target marker, and a point cloud that represents a third target marker arranged behind the second position with reference to the control point, and
the third step being structured to combine the first three-dimensional point cloud set and the second three-dimensional point cloud set, after alignment with reference to the point cloud that represents the second target marker.

In this invention, a target marker (first target marker) arranged on the front side with reference to the control point, and a target marker (second target marker) arranged at the middle are measured so as to be fallen in a measurement range, to acquire a first three-dimensional point cloud set. Then, the target marker (second target marker) arranged at the middle, and a target marker (third target marker) arranged on the rear side with reference to the control point are measured so as to be fallen in a measurement range, to acquire a second three-dimensional point cloud set. The first three-dimensional point cloud set and the second three-dimensional point cloud set are further combined to create a three-dimensional model (cylindrical model) that represents the inner circumferential face of the tunnel. A reference used herein for the alignment for combination is the point cloud data that represents the second target marker actually arranged on the inner circumferential face of the tunnel to be measured, so that a cylindrical model can be created with higher accuracy than in a case where the alignment was made according to coordinates with reference to the position of the measuring means, or according to coordinates with reference to the control point.

### ADVANTAGEOUS EFFECTS OF INVENTION

This invention can provide a construction management system capable of creating a three-dimensional model that represents an inner circumferential face of a tunnel and the individual positions of the tunnel with high accuracy, and a construction management method applicable to the system.

### BRIEF DESCRIPTION OF DRAWINGS

[FIG. 1] FIG. 1 is a drawing illustrating a structure of a construction management system according to this embodiment.
[FIG. 2] FIG. 2 is a flow chart illustrating procedures of a construction management method according to this embodiment.
[FIG. 3] FIG. 3 is a conceptual drawing illustrating a step of placing target markers.
[FIG. 4] FIG. 4 is a conceptual drawing illustrating a step of measuring with a laser scanner.
[FIG. 5] FIG. 5 is a flow chart illustrating processing procedures of analysis with a controller.
[FIG. 6] FIG. 6 is a conceptual drawing illustrating a comparison process for cylindrical models.

### DESCRIPTION OF EMBODIMENTS

Embodiments of this invention will be explained below referring to the attached drawings. Note that all similar constituents in all drawings will have the same reference signs to properly skip the explanation as appropriate.

### <Structure of Construction Management System 100 of this Embodiment>

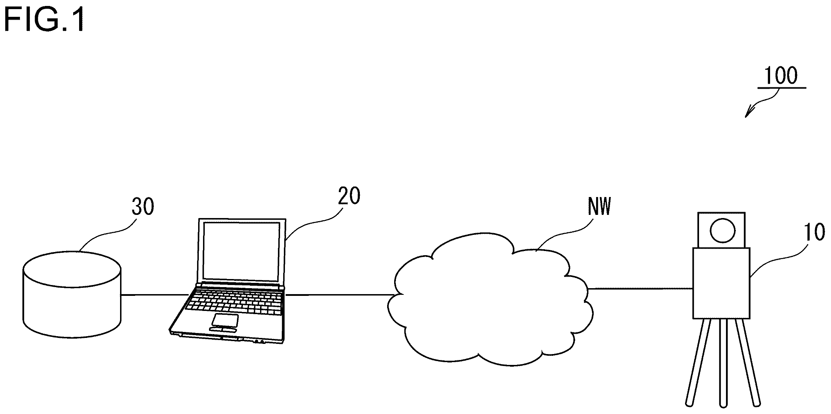

FIG. 1 is a drawing illustrating a structure of a construction management system 100 according to this embodiment.

The construction management system 100 has a laser scanner 10, a controller 20, and a database 30.

The laser scanner 10 and the controller 20 can communicate with each other through a computer network NW. A mode of the computer network NK in implementing this invention is not specifically limited, and may be wired network, wireless network, or combination thereof, whose structure may even contain internet connection.

The laser scanner 10 is a measuring instrument structured to acquire point cloud data that three-dimensionally represents a shape of the inner circumferential face of the tunnel, by radially irradiating laser onto the surrounding area, and corresponds to a "measuring means" in this invention.

The laser scanner 10 is structured to be able to travel in the longitudinal direction from the entrance side of the tunnel, and can measure the inner circumferential face of the tunnel from the individual points (individually different positions) in the tunnel.

The travel of the laser scanner 10 may rely upon manual handling, may rely upon mounting on an unillustrated vehicle, or may rely upon self-traveling of the laser scanner 10 *per se.*

Although this embodiment will explain a case where the laser scanner 10 is used as a structure corresponded to the "measuring means" as described above, a part of the measurement may alternatively rely upon the total station.

The controller 20 can transmit various data to the laser scanner 10, to remotely control the laser scanner 10. The controller 20 can also process various data received from the laser scanner 10, and thus corresponds to the "data processing means" is this invention. The controller 20 can store the processed data into the database 30.

Note, although FIG. 1 illustrates the controller 20 as a single apparatus, any process in this embodiment explained to be processed by the controller 20 (data processing means) is not always necessarily processed by a single apparatus, and instead may be processed by a plurality of apparatuses in a distributed manner. In a case where the process of the controller 20 (data processing means) relies upon a plurality of apparatuses, this invention may alternatively be implemented by a mode in which the individual apparatuses are separated by the computer network NW, for example, by a mode with use of an apparatus installed at a tunnel construction site, and an apparatus placed on a cloud.

### <Procedures of Construction Management Method of this Embodiment>

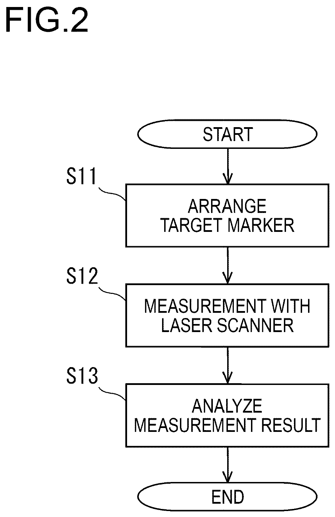

FIG. 2 is a flow chart illustrating procedures of a construction management method of this embodiment.

Procedures of the construction management method of this embodiment will be explained below, while referring to FIG. 2.

First, a control point is placed in a vicinity of the entrance of a tunnel, and target markers are arranged on the inner circumferential face of the tunnel, at positions differently apart in the longitudinal direction of the tunnel from the control point (step S11).

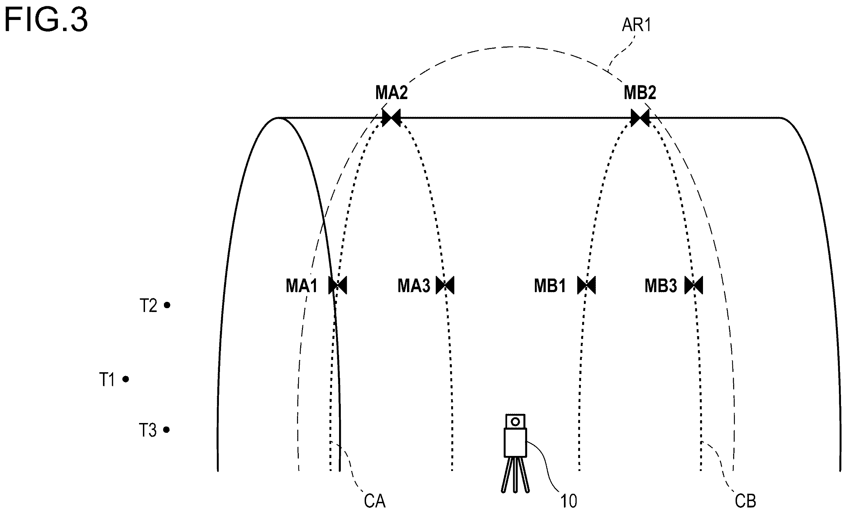

A conceptual drawing regarding arrangement of the target markers in step S11 will be presented in FIG. 3. In this drawing, the lower side is directed to the entrance side (front side) of the tunnel, meanwhile the upper side is directed to the cutting face side (rear side) of the tunnel .

As illustrated in FIG. 3, there are three control points T1, T2, and T3 placed on the entrance side. These control points represent positions which are subjected to control point survey and used for setting an accurate coordinate system (horizontal position and elevation). Although this embodiment will be described on the premise of placing three control points, this invention may be implemented by placing a smaller number of control points (one or two control points).

There are a target marker MA1, a target marker MA2, and a target marker MA3 arranged on the inner circumferential face of the tunnel, along a virtual arc CA positioned on the front side in the longitudinal direction of the tunnel, with reference to the individual control points. In addition, there are a target marker MB1, a target marker MB2, and a target marker MB3 arranged on the inner circumferential face of the tunnel, along a virtual arc CB positioned on the rear side of the arc CA in the longitudinal direction of the tunnel, with reference to the individual control points. Although this embodiment will be described on the premise of arranging three target markers at the individual positions (position of the arc CA, and position of the arc CB), this invention may be implemented by arranging a smaller number of target markers (one or two target markers). In addition, this embodiment explained, for convenience, the mode in which the individual target markers are arranged along the arc CA and the arc CB (and the arc CC described later). Note, however, that the plurality of the target markers (at least two target markers), which are differently apart from the entrance of the tunnel, may only be arranged within a range measurable from one point of measurement when implementing this invention, so that the target markers are not always necessarily arranged so as to depict an arc when connected.

Distance between the positions where the target markers are arranged (distance between the arc CA and the arc CB), although set constant (at 20 m intervals) in this embodiment, is not always necessarily constant. At a point in time illustrated in FIG. 3, the distance from the entrance up to the cutting face is still short, allowing only two positions for arranging the target markers. Within this level of range, the individual target markers will fall in a measurement range AR1 (a range indicated by a broken line in FIG. 3) for one shot of the laser scanner 10 when placed nearly at a middle point between the arc CA and the arc CB. Note in the explanation below, the three-dimensional point cloud data acquired by one shot of measurement with the laser scanner 10 may occasionally be referred to as "three-dimensional point cloud set".

At the point in time illustrated in FIG. 3, the laser scanner 10 is placed so that the individual target markers will fall in the measurement range for one shot, and center positions of the individual target markers (distances between the position of placement of the laser scanner 10 to the centers of the individual target markers) are measured. The controller 20 determines the center coordinates of the individual target markers with reference to the measurement result (the center coordinates of the individual target markers are determined with reference to the coordinate system determined by the control point survey). The center coordinates of the individual target markers determined by the controller 20 are stored in the database 30.

Next, the laser scanner 10 is moved in the longitudinal direction from the entrance side of the tunnel where the control points are placed, and the measurement with the laser scanner 10 is conducted at a different position (step S12). As explained previously, the laser scanner 10 corresponds to the "measuring means" in this invention.

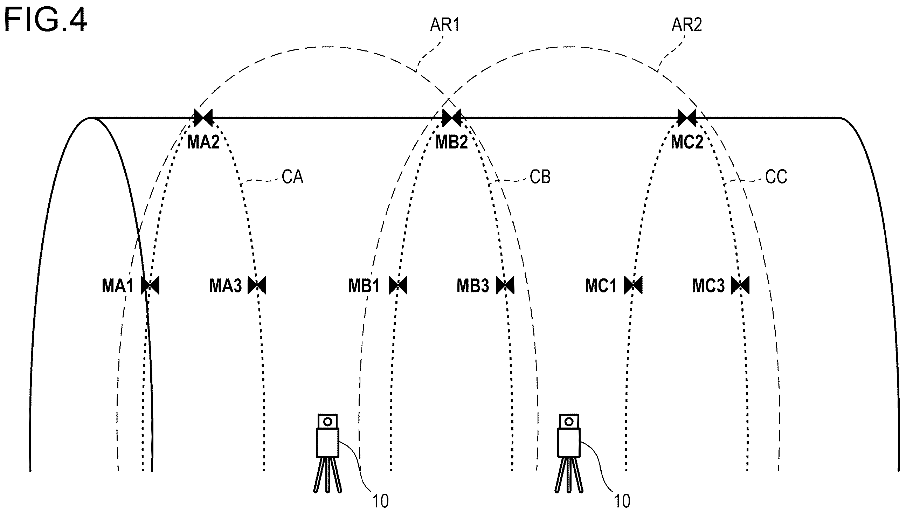

A conceptual drawing regarding measurement with the laser scanner 10 in step S12 will be illustrated in FIG. 4. Note, that the laser scanner 10 depicted at two positions in FIG. 4 means that a single laser scanner 10 travels for measurement, not meaning that two units of the laser scanner 10 are used for the measurement at the same time.

At a point in time illustrated in FIG. 4, the tunnel excavation made progress from a point in time illustrated in FIG. 3, with an increased distance from the entrance to the cutting face, and with three positions of arrangement of the target markers (position for the arc CA, position for the arc CB, and position for the arc CC). There are a target marker MC1, a target marker MC2, and a target marker MC3 arranged on the inner circumferential face of the tunnel, along the virtual arc CC positioned on the rear side of the arc CA and the arc CB in the longitudinal direction of the tunnel.

Now, the three-dimensional point cloud set acquired by the measurement with the laser scanner 10 placed on the entrance side (point cloud data that falls in the measurement range AR1 indicated by the broken line in FIG. 4) contains a point cloud that represents the target markers on the arc CA (target markers MA1 to MA3), and a point cloud that represents the target markers on the arc CB (target markers MB1 to MB3).

Meanwhile, the three-dimensional point cloud set acquired by the measurement with the laser scanner 10 placed on the cutting face side (point cloud data that falls in a measurement range AR2 indicated by a broken line in FIG. 4) contains the point cloud that represents the target markers on the arc CB (target markers MB1 to MB3), and a point cloud that represents the target markers on the arc CC (target markers MC1 to MC3).

Next, the controller 20 stores and accumulates each of the three-dimensional point cloud sets acquired by the measurement with the laser scanner 10 in the database 30, and then analyzes the accumulated three-dimensional point cloud sets (step S13).

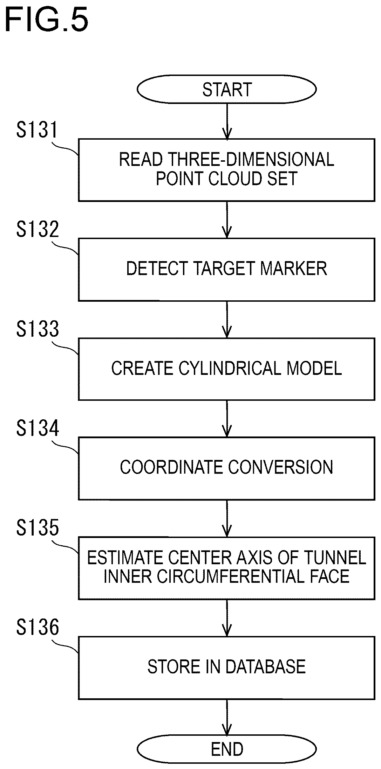

The procedures of the analysis conducted by the controller 20 in step S13 will be detailed below. FIG. 5 is a flow chart illustrating processing procedures of analysis with the controller 20.

The controller 20 receives each of the three-dimensional point cloud sets acquired by the measurement conducted by the laser scanner 10, through the computer network NW, stores the point cloud sets in the database 30, and upon completion of a series of measurement, reads all of the three-dimensional point cloud sets acquired by the measurement out from the database 30 (step S131).

The controller 20 analyzes the thus read three-dimensional point cloud sets, and detects a point cloud that represents the target marker contained in each three-dimensional point cloud set (step S132).

If any three-dimensional point cloud set, whose target markers for alignment (the target markers MB1 to MB3 on the arc CB, in this embodiment) are undetectable by the controller 20, were found in step S132, the laser scanner 10 is preferably moved to the position where such measurement occurred, to conduct the measurement again. This is because the target markers for alignment, if contained in the three-dimensional point cloud set, will enable the process in step S133 described later.

The controller 20 creates a cylindrical model that represents the inner circumferential face of the tunnel, by combining the three-dimensional point cloud set obtained by the measurement conducted by the laser scanner 10 placed on the entrance side, and the three-dimensional point cloud set obtained by the measurement conducted by the laser scanner 10 placed on the cutting face side (step S133).

In step S133, the controller 20 creates a cylindrical model, by combining the three-dimensional point cloud set acquired by the measurement conducted by the laser scanner 10 placed on the entrance side, and the three-dimensional point cloud set acquired by the measurement conducted by the laser scanner 10 placed on the cutting face side, according to alignment with reference to the point cloud that represents the target markers for alignment.

The cylindrical model herein means a three-dimensional model that represents the shape of the inner circumferential face of the tunnel. Since the shape is nearly cylindrical, the model is called cylindrical model.

The controller 20 converts the position coordinates of each point cloud that constitutes the cylindrical model created in step S133, to a coordinate system determined by the control point survey (step S134). More specifically, the controller 20 conducts a conversion process in step S134, with reference to the center coordinates of the individual target markers stored in the database 30 in step S11, and position information of the point clouds that correspond to the individual target markers contained in the cylindrical model.

The controller 20 estimates a center axis of the cylindrical model created in step S133 (step S135). The center axis estimated in step S135 will be used for a comparison process for the cylindrical models described later.

The controller 20 links the cylindrical model created by the processes in step S133 to step S135, and analysis result derived from the cylindrical model (position information of the individual point clouds after coordinate conversion, and the estimated center axis), and stores the result into the database 30 (step S136).

Every time the controller 20 conducts the aforementioned series of processes (step S11 to step S13), the database 30 will have accumulated therein the cylindrical models and the analysis results derived from the cylindrical models.

The aforementioned series of processes are preferably conducted periodically during the construction period of the tunnel (once a day, for example). The controller 20 can analyze deformation of the inner section of the tunnel, by comparing a plurality of cylindrical models obtained from different periods and analysis results derived from these cylindrical models, and by detecting difference.

In other words, the controller 20 may also have a structure that corresponds to the "analysis means" in this invention, if structured to compare the second cylindrical model, which was obtained by combining a three-dimensional point cloud set obtained in a period later than acquisition of the three-dimensional point cloud set used for creating the first cylindrical model, with use of the control point and the target markers having been used for creating the first cylindrical model, or the analysis result derived from the second cylindrical model, with the first cylindrical model or the analysis result derived from the first cylindrical model.

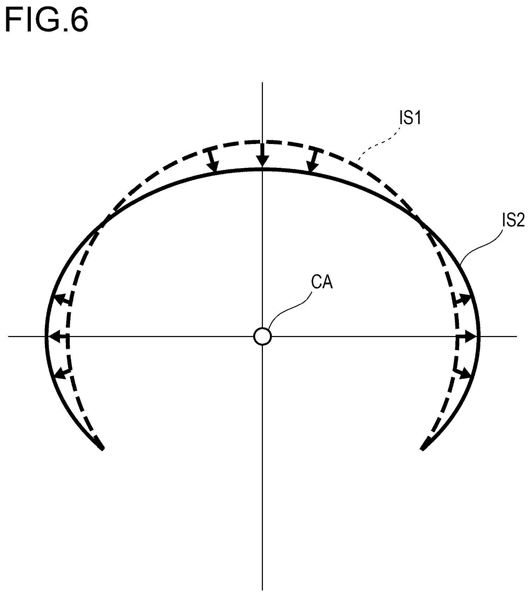

FIG. 6 illustrates a concept of the aforementioned comparison process for the cylindrical models. Note that FIG. 6 illustrates a cross section IS1 of the first cylindrical model, and a cross section IS2 of the second cylindrical model, for convenience. Center axis CA illustrated in FIG. 6 is common for the cross section IS1 and the cross section IS2.

As illustrated in FIG. 6, the shape of the inner circumferential face of the tunnel will shrink in the perpendicular direction and will expand in the horizontal direction with time. Upon confirming that the shape of the inner section of the tunnel became no longer deformable a lot (for example, the difference fell under a predetermined threshold), the natural ground being excavated is judged to be stabilized.

In the comparison process for the first cylindrical model and the second cylindrical model explained while referring to FIG. 6, both of the first cylindrical model and the second cylindrical model are necessarily expressed in a common coordinate system (in this embodiment, a coordinate system determined by control point survey with reference to the control points T1 to T3).

More specifically, when conducting the coordinate conversion in step S134, the controller 20 determines whether or not there is a coincidence between the position of the point cloud that represents the target markers (target markers MA1 to MA3) on the arc CA contained in the first cylindrical model, and the position of the point cloud that represents the same target markers contained in the second cylindrical model, with reference to the same control points T1 to T3.

If the former and the latter were found to coincide in the judgment, the controller 20 conducts conversion of the point cloud that represents the first cylindrical model, and the point cloud that represents the second cylindrical model into a coordinate system with reference to the positions of the control points T1 to T3 and the point clouds of the target markers MA1 to MA3.

The positions of the point clouds that represent the target markers MA1 to MA3 are thus used for the judgment, because these markers are closest to the entrance side, and can minimize an error from the control points.

Now, a specific example of the aforementioned comparison process for the cylindrical models will be explained. Note that the comparison process for the cylindrical models or the like described herein is merely one specific example. Any other technique is applicable within a scope the object of this invention will be fulfilled.

The controller 20 calculates the distance from the center axis of the cylindrical model estimated in step S135 to the inner circumferential face represented by the cylindrical model for each point cloud, and expands the cylindrical model onto a plane, with reference to the distance calculated for each point cloud.

The controller 20 then compares the point cloud expanded onto a plane from the cylindrical model created according to the previous measurement (first cylindrical model), with the point cloud expanded onto a plane from the cylindrical model created according to the subsequent measurement (second cylindrical model), to determine a difference. The controller 20 can also analyze deformation of the inner section of the tunnel, with reference to the thus determined difference (for example, can judge that the deformation of the inner section of the tunnel has settled, on the basis that the difference fell below a predetermined threshold).

Note that the center axis used for the planar expansion of the first cylindrical model may be repurposed for the planar expansion of the second cylindrical model. **In** other words, the controller 20 can use the same center axis for the planar expansion of the first cylindrical model and the second cylindrical model. This contributes to skip the estimation process in step S135, out of the series of processes (step S11 to step S13) according to the subsequent measurement, thereby saving the load of processing.

The processes thus conducted as described above can create the cylindrical model that represents the shape of the inner circumferential face of the tunnel with high accuracy. Moreover, by updating the cylindrical model every time the measurement results are periodically obtained from the laser scanner 10, and by comparing the currently represented cylindrical model with the past cylindrical model, it now becomes possible to monitor the settling of deformation of the inner section of the tunnel, to ensure safety of workers at the tunnel construction work, and to properly determine when to proceed with the tunnel excavation.

### <Other Modified Examples>

Implementation of this invention is not limited to the aforementioned embodiments, and is allowed for various modifications and improvements. Modified examples not having been described above will be enumerated below.

The structure of the construction management system 100 illustrated in FIG. 1 merely represents a specific example, to which implementation of this invention is not limited. As long as the object of this invention will be fulfilled, any unillustrated structure may be added, or a part of the illustrated structure may be omitted.

The flow charts illustrated in FIG. 2 and FIG. 5 present specific examples of the procedures of the construction management method, to which implementation of this invention is not limited. As long as the object of this invention will be fulfilled, any step for implementing a process having not been explained in the aforementioned embodiment may be added, a part of the illustrated steps may be omitted, or the order (temporal sequence) of the illustrated steps may be changed.

FIG. 3 has exemplified two positions where the target markers are arranged (on the inner circumferential face along the arc CA, and on the inner circumferential face along the arc CB), and FIG. 4 has exemplified three positions where the target markers are arranged (on the inner circumferential face along the arc CA, on the inner circumferential face along the arc CB, and on the inner circumferential face along the arc CC). Implementation of this invention is, however, not limited thereto.

The number of positions where the target markers are arranged will increase, as the excavation of the tunnel proceeds, and as the inner space of the tunnel widens (elongates).

### <Supplementary Notes>

This embodiment encompasses the technical spirits below.
(1) A tunnel construction management system including:
   a control point placed in a vicinity of an entrance of a tunnel;
   target markers arranged on an inner circumferential face of the tunnel, at minimum three positions differently apart in the longitudinal direction of the tunnel from the control point;
   a measuring means structured to travel in the longitudinal direction from the entrance side where the control point is placed, and to measure the inner circumferential face from different positions;
   a data processing means structured to create a cylindrical model that represents the inner circumferential face, by combining a first three-dimensional point cloud set obtained from measurement taken at a first position, and a second three-dimensional point cloud set obtained from measurement taken at a second position different from the first position,
   the first three-dimensional point cloud set containing a point cloud that represents a first target marker arranged in front of the first position with reference to the control point, and a point cloud that represents a second target marker arranged behind the first position and in front of the second position with reference to the control point,
   the second three-dimensional point cloud set containing a point cloud that represents the second target marker, and a point cloud that represents a third target marker arranged behind the second position with reference to the control point, and
   the data processing means being structured to combine the first three-dimensional point cloud set and the second three-dimensional point cloud set, after alignment with reference to the point cloud that represents the second target marker.
(2) The tunnel construction management system according to (1), further including an analysis means structured to analyze deformation of an inner section of the tunnel, by comparing:
   a first cylindrical model created by the data processing means from measurement with the measuring means with use of the control point and the target markers, or an analysis result derived from the first cylindrical model; with
   a second cylindrical model created by using the control point and the target markers same as those used for creating the first cylindrical model, and by combining a three-dimensional point cloud set obtained in a period later than acquisition of the three-dimensional point cloud set used for creating the first cylindrical model, or an analysis result derived from the second cylindrical model.
(3) The tunnel construction management system according to (2), wherein
   the analysis means is structured:
   to analyze the cylindrical model to estimate a center axis of the inner circumferential face, to calculate a distance from the estimated center axis to the inner circumferential face represented by the cylindrical model for each point cloud, and to expand the cylindrical model onto a plane with reference to the distance calculated for each point cloud; and
   to compare the point cloud expanded onto a plane from the first cylindrical model and the point cloud expanded onto a plane from the second cylindrical model, to determine a difference of the inner circumferential faces represented by the individual cylindrical models, and to analyze deformation of the inner section of the tunnel, with reference to the determined difference.
(4) The tunnel construction management system according to (3), wherein
   the analysis means is structured to expand the first cylindrical model and the second cylindrical model onto a plane, with use of the same center axis.
(5) The tunnel construction management system according to any one of (2) to (4), wherein
   if the position of the point cloud that represents the first target marker contained in the first cylindrical model, and the position of the point cloud that represents the first target marker contained in the second cylindrical model coincide with reference to the same control point, the analysis means is structured to conduct conversion of the point cloud that represents the first cylindrical model, and the point cloud that represents the second cylindrical model into a coordinate system with reference to the positions of the control point and the point cloud of the first target marker.
(6) A tunnel construction management method including:
   a first step of placing a control point in a vicinity of an entrance of a tunnel, and arranging target markers on an inner circumferential face of the tunnel, at minimum three points differently apart in the longitudinal direction of the tunnel from the control point;
   a second step of causing the measuring means for measuring the inner circumferential face to travel in the longitudinal direction from the entrance side where the control point is placed, and of causing the measuring means to take measurements from the different positions; and
   a third step of creating a cylindrical model that represents the inner circumferential face, by combining a first three-dimensional point cloud set obtained from measurement taken at a first position, and a second three-dimensional point cloud set obtained from measurement taken at a second position different from the first position,
   the first three-dimensional point cloud set containing a point cloud that represents a first target marker arranged in front of the first position with reference to the control point, and a point cloud that represents a second target marker arranged behind the first position and in front of the second position with reference to the control point,
   the second three-dimensional point cloud set containing a point cloud that represents the second target marker, and a point cloud that represents a third target marker arranged behind the second position with reference to the control point, and
   the third step being structured to combine the first three-dimensional point cloud set and the second three-dimensional point cloud set, after alignment with reference to the point cloud that represents the second target marker.
(7) The tunnel construction management method according to (6), being structured to analyze deformation of an inner section of the tunnel, by comparing:
   a first cylindrical model created by a series of processes including the first step, the second step, and the third step, or an analysis result derived from the first cylindrical model; with
   a second cylindrical model obtained by using the control point and the target markers same as those used for creating the first cylindrical model, and by combining a three-dimensional point cloud set obtained in a period later than acquisition of the three-dimensional point cloud set used for creating the first cylindrical model, or from an analysis result based on the second cylindrical model.

This application claims priority to Japanese Patent Application No. 2022-149814 filed on September 21, 2022, the entire contents of which are incorporated by reference herein.

### REFERENCE SIGNS LIST

- 100: construction management system
- 10: laser scanner
- 20: controller
- 30: database
- NW: computer network

## Claims

1. A tunnel construction management system comprising:
a control point placed in a vicinity of an entrance of a tunnel;
target markers arranged on an inner circumferential face of the tunnel, at minimum three positions differently apart in the longitudinal direction of the tunnel from the control point;
a measuring means structured to travel in the longitudinal direction from the entrance side where the control point is placed, and to measure the inner circumferential face from different positions;
a data processing means structured to create a cylindrical model that represents the inner circumferential face, by combining a first three-dimensional point cloud set obtained from measurement taken at a first position, and a second three-dimensional point cloud set obtained from measurement taken at a second position different from the first position,
the first three-dimensional point cloud set containing a point cloud that represents a first target marker arranged in front of the first position with reference to the control point, and a point cloud that represents a second target marker arranged behind the first position and in front of the second position with reference to the control point,
the second three-dimensional point cloud set containing a point cloud that represents the second target marker, and a point cloud that represents a third target marker arranged behind the second position with reference to the control point, and
the data processing means being structured to combine the first three-dimensional point cloud set and the second three-dimensional point cloud set, after alignment with reference to the point cloud that represents the second target marker.

2. The tunnel construction management system according to claim 1, further comprising an analysis means structured to analyze deformation of an inner section of the tunnel, by comparing:
a first cylindrical model created by the data processing means from measurement with the measuring means with use of the control point and the target markers, or an analysis result derived from the first cylindrical model; with
a second cylindrical model created by using the control point and the target markers same as those used for creating the first cylindrical model, and by combining a three-dimensional point cloud set obtained in a period later than acquisition of the three-dimensional point cloud set used for creating the first cylindrical model, or an analysis result derived from the second cylindrical model.

3. The tunnel construction management system according to claim 2, wherein
the analysis means is structured:
to analyze the cylindrical model to estimate a center axis of the inner circumferential face, to calculate a distance from the estimated center axis to the inner circumferential face represented by the cylindrical model for each point cloud, and to expand the cylindrical model onto a plane with reference to the distance calculated for each point cloud; and
to compare the point cloud expanded onto a plane from the first cylindrical model and the point cloud expanded onto a plane from the second cylindrical model, to determine a difference of the inner circumferential faces represented by the individual cylindrical models, and to analyze deformation of the inner section of the tunnel, with reference to the determined difference.

4. The tunnel construction management system according to claim 3, wherein
the analysis means is structured to expand the first cylindrical model and the second cylindrical model onto a plane, with use of the same center axis.

5. The tunnel construction management system according to any one of claims 2 to 4, wherein
if the position of the point cloud that represents the first target marker contained in the first cylindrical model, and the position of the point cloud that represents the first target marker contained in the second cylindrical model coincide with reference to the same control point, the analysis means is structured to conduct conversion of the point cloud that represents the first cylindrical model, and the point cloud that represents the second cylindrical model into a coordinate system with reference to the positions of the control point and the point cloud of the first target marker.

6. A tunnel construction management method comprising:
a first step of placing a control point in a vicinity of an entrance of a tunnel, and arranging target markers on an inner circumferential face of the tunnel, at minimum three points differently apart in the longitudinal direction of the tunnel from the control point;
a second step of causing the measuring means for measuring the inner circumferential face to travel in the longitudinal direction from the entrance side where the control point is placed, and of causing the measuring means to take measurements from the different positions: and
a third step of creating a cylindrical model that represents the inner circumferential face, by combining a first three-dimensional point cloud set obtained from measurement taken at a first position, and a second three-dimensional point cloud set obtained from measurement taken at a second position different from the first position,
the first three-dimensional point cloud set containing a point cloud that represents a first target marker arranged in front of the first position with reference to the control point, and a point cloud that represents a second target marker arranged behind the first position and in front of the second position with reference to the control point,
the second three-dimensional point cloud set containing a point cloud that represents the second target marker, and a point cloud that represents a third target marker arranged behind the second position with reference to the control point, and
the third step being structured to combine the first three-dimensional point cloud set and the second three-dimensional point cloud set, after alignment with reference to the point cloud that represents the second target marker.

7. The tunnel construction management method according to claim 6, being structured to analyze deformation of an inner section of the tunnel, by comparing:
a first cylindrical model created by a series of processes including the first step, the second step, and the third step, or an analysis result derived from the first cylindrical model; with
a second cylindrical model obtained by using the control point and the target markers same as those used for creating the first cylindrical model, and by combining a three-dimensional point cloud set obtained in a period later than acquisition of the three-dimensional point cloud set used for creating the first cylindrical model, or from an analysis result based on the second cylindrical model.
